# EUROPÄISCHE PATENTANMELDUNG

(11) **EP 2 450 261 A2**
(43) Veröffentlichungstag der Anmeldung: **09.05.2012**
(21) Anmeldenummer: 11008686.5
(22) Anmeldetag: 29.10.2011
(51) Int. Cl.: B62D 5/04

(54) **Vorrichtung zum Ansteuern eines Elektromotors für eine Hilfskraftlenkung**

(30) Priorität: 09.11.2010 DE 102010050820
(71) Anmelder: Audi AG, 85045 Ingolstadt (DE)
(72) Erfinder: Müller, Rolf, 85055 Ingolstadt (DE); Schuller, Jürgen, Dr., 85055 Ingolstadt (DE)
(74) Vertreter: Patzelt, Heike Anna Maria

(57) **Zusammenfassung**

Bei einer Vorrichtung zum Ansteuern eines Elektromotors für eine Hilfskraftlenkung gibt es typischerweise als erste Datenverarbeitungseinrichtung (12) einen Haupt-Rechner, der Signale von Sensoren (S1, S2) empfängt, aufbereitet und Steuersignale abgibt. Die Rolle eines Überwachungsrechners (14) ist bekannt. Vorliegend empfängt auch dieser Überwachungsrechner (14) Signale von den Sensoren (S1, S2) und ist daher in der Lage, bei einem Ausfall oder Defekt des Haupt-Rechners (12) an dessen Stelle zu treten.

## Beschreibung

Die Erfindung betrifft eine Vorrichtung zum Ansteuern eines Elektromotors für eine Hilfskraftlenkung nach dem Oberbegriff des Patentanspruchs 1, wie sie aus der DE 10 2008 047 772 A1 bekannt ist. Sie betrifft auch ein Kraftfahrzeug.

Gemäß dieser Druckschrift ist bei einer solchen Vorrichtung als erste Datenverarbeitungseinrichtung ein so genannter Haupt-Rechner vorgesehen. Dieser ist mit Sensoren gekoppelt, von denen er Messwerte empfängt. Auf Grundlage dieser Messwerte gibt der Haupt-Rechner Steuersignale ab, die zumindest mittelbar zur Ansteuerung des Elektromotors dienen. Im Rahmen der vorliegenden Anmeldung sind die genannten Sensoren insbesondere für die Messung des an einer Lenkhandhabe aufgebrachten Lenkmoments und für die Winkelstellung (Drehlage) eines Rotors des Elektromotors zuständig.

Gemäß der DE 10 2008 047 772 A1 gibt es einen so genannten Überwachungsrechner als zweite Datenverarbeitungseinrichtung, und dessen Aufgabe besteht darin, den Haupt-Rechner zu überwachen. Zu diesem Zweck empfängt die zweite Datenverarbeitungseinrichtung insbesondere bestimmte (Kontroll-)Signale von der ersten Datenverarbeitungseinrichtung, aufgrund derer sie feststellen kann, ob die erste Datenverarbeitungseinrichtung korrekt oder ausreichend korrekt arbeitet.

Aus der DE 10 2008 048 952 A1 ist es bekannt, dass zusätzlich zu einem Haupt-Rechner ein weiterer Rechner vorgesehen ist, der die Sensordaten aufbereitet, nämlich eben für den Haupt-Rechner, welcher dann die Sensordaten bereits aufbereitet einlesen kann.

Ein bei Vorrichtungen nach dem Oberbegriff des Patentanspruchs 1 bestehendes Problem liegt darin, dass, anders als etwa bei pneumatischen oder hydraulischen Lösungen, ein Ausfall einer elektrischen Einrichtung abrupt erfolgen kann, sodass abrupt die Hilfskraftlenkung nicht mehr zur Verfügung steht.

Es ist Aufgabe der vorliegenden Erfindung, beim Ausfall elektrischer Komponenten in diesem Falle eine Notlauffunktion zur Verfügung zu stellen.

Die Aufgabe wird bei einer Vorrichtung nach dem Oberbegriff des Patentanspruchs 1 dadurch gelöst, dass die zweite Datenverarbeitungseinrichtung ebenfalls mit den Sensoren gekoppelt ist und ausgelegt ist, bei einem Ausfall der ersten Datenverarbeitungseinrichtung an deren Stelle zu treten, um Steuersignale abzugeben. Die Aufgabe wird auch durch ein Kraftfahrzeug mit dieser Vorrichtung gelöst.

Die zweite Datenverarbeitungseinrichtung hat also zusätzlich zur Aufgabe der Überwachung noch die Aufgabe, zumindest einen Teil der Aufgaben der ersten Datenverarbeitungseinrichtung zu übernehmen, sollte dies notwendig werden. Sie ist mit den Sensoren gekoppelt, damit sie, genauso wie die erste Datenverarbeitungseinrichtung, die Sensordaten unmittelbar verarbeiten kann, um Steuersignale zu erzeugen, die zumindest mittelbar der Ansteuerung des Elektromotors dienen.

Durch die Erfindung wird mit relativ geringem Aufwand, der hauptsächlich in einer entsprechenden Ankopplung der Sensoren an die zweite Datenverarbeitungseinrichtung besteht, die Möglichkeit geschaffen, eine Notlauffunktion bereitzustellen, bei der die Vorrichtung zum Ansteuern eines Elektromotors für eine Hilfskraftlenkung ausschließlich mithilfe der zweiten Datenverarbeitungseinrichtung funktioniert, wobei die erste Datenverarbeitungseinrichtung außer, Funktion gesetzt wird.

Eine solche Notlauffunktion ist insbesondere dann möglich, wenn ein entsprechender Algorithmus in der zweiten Datenverarbeitungseinrichtung zum Ablauf gebracht werden kann. Es kann sich hierbei um einen einfacheren Algorithmus handeln, als er sonst von der ersten Datenverarbeitungseinrichtung durchlaufen wird; dann genügt es, wenn die zweite Datenverarbeitungseinrichtung eine geringere Rechenkapazität hat (eine geringere Rechenleistung zur Verfügung stellt) als die erste Datenverarbeitungseinrichtung. Im Verhältnis zur ersten Datenverarbeitungseinrichtung ist also die zweite Datenverarbeitungseinrichtung wesentlich einfacher aufgebaut, im Verhältnis zu einem herkömmlichen Überwachungsrechner ist sie aber in gewisser Hinsicht "ertüchtigt".

Die von den Datenverarbeitungseinrichtungen abgegebenen Steuersignale können zwar unmittelbar zum Ansteuern eines Elektromotors dienend ausgestaltet sein, bevorzugt gibt es jedoch nachgeordnet eine Einrichtung zum Wandeln der von den jeweiligen Datenverarbeitungseinrichtungen abgegebenen Steuersignale in Steuersignale für Schalter, insbesondere Transistoren. Die Transistoren empfangen dann diese Steuersignale von der Einrichtung zum Wandeln und bewirken die Abgabe von Steuersignalen an den Elektromotor. Auf diese Weise muss nicht die Datenverarbeitungseinrichtung unmittelbar den Elektromotor ansteuern.

Es wird besonders einfach, die zweite Datenverarbeitungseinrichtung an die Stelle der ersten Datenverarbeitungseinrichtung treten zu lassen, wenn ein entsprechender Schalter bereitgestellt wird, der ansteuerbar ist und im entsprechenden Umschaltfall von der zweiten Datenverarbeitungseinrichtung auch angesteuert wird. Der Steuereingang für den Schalter ist daher bevorzugt mit der zweiten Datenverarbeitungseinrichtung gekoppelt.

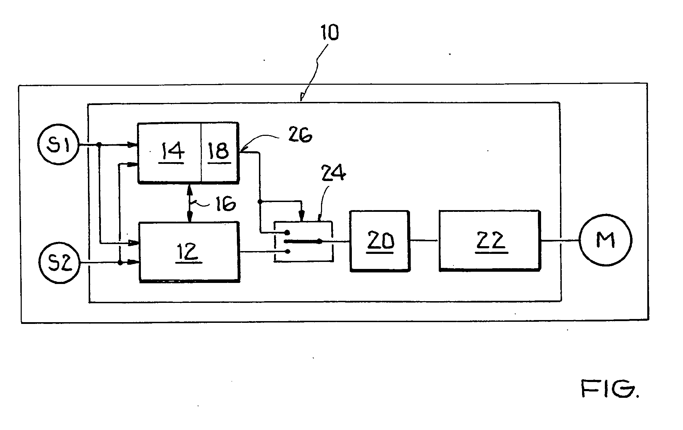

Nachfolgend wird eine bevorzugte Ausführungsform der Erfindung unter Bezug auf die Zeichnung beschrieben, in der die einzige Figur eine schematische Darstellung einer erfindungsgemäßen Vorrichtung zum Ansteuern eines Elektromotors M für eine Hilfskraftlenkung ist.

Die im Ganzen mit 10 bezeichnete Vorrichtung zum Ansteuern eines Elektromotors M für eine Hilfskraftlenkung ist bevorzugt in einem in der Figur nicht gezeigten Kraftfahrzeug als Steuergerät ausgebildet. Der Elektromotor M stellt hierbei ein unterstützendes Drehmoment bereit, das zu dem an einer Lenkhandhabe des Kraftfahrzeugs aufgebrachten Lenkmoment hinzutritt, um zumindest ein Rad des Kraftfahrzeugs auszulenken.

Die Vorrichtung 10 empfängt Signale von zwei Sensoren S1 und S2, von denen der Sensor S1 besagtes Lenkmoment misst, das an der Lenkhandhabe aufgebracht wird. Der Sensor S2 misst die Winkelstellung (Drehlage) eines Rotors des Elektromotors M, die typischerweise einer bestimmten Stellung eines Rades entspricht, genauso auch einer Stellung der Lenkhandhabe.

Die Vorrichtung 10 umfasst einen Haupt-Rechner 12, der von beiden Sensoren S1 und S2 Signale empfängt. Der Haupt-Rechner 12 wird in an sich bekannter Weise von einem Überwachungsrechner 14 überwacht, der vorliegend als Mikrocontroller ausgebildet ist, aber auch ein anwendungsspezifischer Schaltkreis (ASIC) sein kann. Über eine Schnittstelle 16 werden Signale ausgetauscht. Vorliegend ist es Eigenschaft des Überwachungsrechners 14, dass er ebenfalls Signale von beiden Sensoren S1 und S2 empfängt. Ferner ist in einem entsprechenden Speicher 18 des Überwachungsrechners 14 ein Algorithmus abgespeichert, der im Rahmen einer Notlauffunktion aktiviert werden kann.

Die Aufgabe des Haupt-Rechners besteht darin, Steuersignale abzugeben, die von einer Wandlereinheit 20 (so genannte "Gate Drive Unit", GDU) in Steuersignale für MOSFETs oder sonstige Transistoren umgewandelt werden, wobei bei Ansteuerung der Transistoren der Elektromotor mit entsprechenden Steuersignalen beaufschlagt wird. Im Haupt-Rechner 12 läuft ein komplexer Algorithmus ab, in dessen Rahmen die von den Sensoren S1 und S2 übermittelten Messwerte ausgewertet werden und die Steuersignale erzeugt werden.

Erfasst nun der Überwachungsrechner 14, dass der Haupt-Rechner 12 nicht ordnungsgemäß funktioniert oder möglicherweise gar nicht mehr funktioniert, so steuert er einen zwischen dem Haupt-Rechner 12 und der Wandlereinheit 20 angeordneten Schalter 24 an und bewirkt, dass nunmehr ein Signalausgang 26 des Überwachungsrechners 14 mit der Wandlereinheit 20 gekoppelt wird. Der Überwachungsrechner 14 arbeitet dann gemäß dem in seinem Speicher 18 abgelegten Algorithmus, der in vereinfachter, näherungsweiser Form das bewirkt, was zuvor der Haupt-Rechner 12 bewirkte.

Im Rahmen einer Notlauffunktion kann das Kraftfahrzeug dann noch eine Weile weiter betrieben werden, wobei die Hilfskraftlenkung zwar nicht mehr so gut wie zuvor funktioniert, aber noch ausreichend gut, um das Kraftfahrzeug noch über eine zumindest kurze Strecke führen zu können.

## Patentansprüche

1. Vorrichtung (10) zum Ansteuern eines Elektromotors (M) für eine Hilfskraftlenkung, mit einer ersten Datenverarbeitungseinrichtung (12), die mit Sensoren (S1, S2), insbesondere für das an einer Lenkhandhabe aufgebrachte Lenkmoment und für die Winkelstellung eines Rotors des Elektromotors (M), gekoppelt ist und zur Abgabe von Steuersignalen ausgelegt ist, und mit einer zweiten Datenverarbeitungseinrichtung (14), die die erste Datenverarbeitungseinrichtung (12) zu überwachen ausgelegt ist,
**dadurch gekennzeichnet, dass**
die zweite Datenverarbeitungseinrichtung (14) ebenfalls mit den Sensoren (S1, S2) gekoppelt ist und ausgelegt ist, bei einem Ausfall der ersten Datenverarbeitungseinrichtung (12) an deren Stelle zu treten, um Steuersignale abzugeben.

2. Vorrichtung (10) nach Anspruch 1, bei der die zweite Datenverarbeitungseinrichtung (14) eine geringere Rechenkapazität hat als die erste Datenverarbeitungseinrichtung (12).

3. Vorrichtung nach Anspruch 1 oder 2, mit einer Einrichtung (20) zum Wandeln der von der ersten Datenverarbeitungseinrichtung (12) abgegebenen Steuersignale in Steuersignale für Transistoren (22), und mit Transistoren, die die Steuersignale von der Einrichtung (20) zum Wandeln empfangen und die Abgabe von Steuersignalen an den Elektromotor (M) bewirken.

4. Vorrichtung (10) nach einem der vorhergehenden Ansprüche, mit einem von der zweiten Datenverarbeitungseinrichtung (14) ansteuerbaren Schalter (24) zum Umschalten zwischen einem Steuern durch die erste Datenverarbeitungseinrichtung (12) und einem Steuern durch die zweite Datenverarbeitungseinrichtung (14).

5. Vorrichtung (10) nach einem der vorhergehenden Ansprüche, bei der die zweite Datenverarbeitungseinrichtung (14) als Mikrocontroller oder als anwendungsspezifischer Schaltkreis ausgelegt ist.

6. Kraftfahrzeug mit einer Vorrichtung nach einem der vorhergehenden Ansprüche.
